# EUROPÄISCHE PATENTSCHRIFT

(11) **EP 1 798 905 B1**
(45) Veröffentlichungstag und Bekanntmachung des Hinweises auf die Patenterteilung: **03.02.2010**
(21) Anmeldenummer: 05027664.1
(22) Anmeldetag: 16.12.2005
(51) Int. Cl.: H04L 12/46, H04L 29/06, H04L 29/08

(54) **Verfahren zur Übertragung von auf dem Ethernet-Übertragungsprotokoll basierenden Datenpaketen zwischen zumindest einer mobilen Kommunkationseinheit und einem Kommunikationssystems**
Method for transmission of data packets based on the Ethernet transmission protocol between at least one mobile communication unit and a communication system
Méthode pour la transmission de paquets de données basés sur le protocole de transmission Ethernet entre au moins une unité de communication mobile et un système de communication.

(43) Veröffentlichungstag der Anmeldung: 20.06.2007
(73) Patentinhaber: SIEMENS AKTIENGESELLSCHAFT, 80333 München (DE)
(72) Erfinder: Premec, Domagoj, 10010 Zagreb (HR); Riegel, Maximilian, 90409 Nürnberg (DE)

(56) Entgegenhaltungen:
- US-A1- 2004 221 042
- DINESH MOHAN [EDITOR] MICHAEL CHEN VASILE RADOACA HAMID OULD-BRAHIM NORTEL NETWORKS PASCAL MENEZES TERABEAM NETWORKS: "VPLS/LPE L2VPNs: Virtual Private LAN Services using Logical PE Architecture; draft-ouldbrahim-l2vpn-lpe-02.txt" März 2002 (2002-03), IETF STANDARD-WORKING-DRAFT, INTERNET ENGINEERING TASK FORCE, IETF, CH , XP015004717 ISSN: 0000-0004 * Absatz [2.3.2.1] *
- PARVIZ YEGANI GOPAL DOMMETY CISCO SYSTEMS AVI LIOR BRIDGEWATER CORP KUNTAL CHOWDHURY JAY NAVALI STARENT NETWORKS: "GRE Key Extension for Mobile IPv4; draft-yegani-gre-key-extension-00.txt" IETF STANDARD-WORKING-DRAFT, INTERNET ENGINEERING TASK FORCE, IETF, CH, 10. Juli 2005 (2005-07-10), XP015039962 ISSN: 0000-0004

## Beschreibung

Die Erfindung betrifft ein Verfahren zur Übertragung von auf dem Ethernet-Übertragungsprotokoll basierenden Datenpaketen zwischen zumindest einer mobilen Kommunikationseinheit und einem Kommunikationssystem gemäß dem Oberbegriff des Patentanspruches 1.

Bestehende Kommunikationssysteme bzw. Mobilfunksysteme weisen beispielsweise ein Kommunikationsnetzwerk ("Core Network") auf, an das über Zugangsnetze ("Access Networks") einzelne mobile Kommunikationsendgeräte angeschlossen sind. In derartigen Mobilfunksystemen werden unter anderem auch paketorientierte Kommunikationsdienste zur Verfügung gestellt. Neben der "General Packet Radio Service" (GPRS) Zugangstechnologie erfolgt die Bereitstellung von paketorientierten Kommunikationsdiensten innerhalb eines mobilen Kommunikationssystem über weitere Zugangstechnologien wie beispielsweise die "Worldwide Interoperability for Microwave Access" (WIMAX) Technologie.

Von besonderer Bedeutung im Rahmen der paketorientierten Datenübertragung ist das Internet Protocol (IP) Übertragungsprotokoll, welches mittels einer netzübergreifende Adressierung anhand so genannter IP-Adressen eine Vermittlung von einzelnen Datenpaketen über unterschiedliche Übertragungssysteme ermöglicht. Derzeitig weist die Version 4 des Internet Protokolls (IPv4) mit einem 32-Bit-Adreßsystem die weiteste Verbreitung auf, welche theoretisch einen Adressraum von bis zu vier Milliarden IP-Adressen ermöglicht. In der Praxis ist aber ein großer Teil dieser Adressen durch Gruppenbildung und andere Mechanismen nicht nutzbar, so dass aufgrund der ständig wachsenden Anzahl von Internetnutzern die Schaffung von IP-Adressen mit einem größeren Adressraum erforderlich ist. Hierzu wird seit einigen Jahren an einer Version 6 des Internet Protokolls (IPv6) gearbeitet. Das neue IPv6 weist beispielsweise einen deutlich größeren Adressraum aufgrund eines 128-Bit-Adresssystems auf. Die Zahl der potentiell verfügbaren IP-Adressen erhöht sich hierdurch um ein Vielfaches.

Eine Ergänzung des herkömmlichen Internet-Protokolls ist das Mobile Internet Protokoll oder auch Mobile IP bzw. MIP genannt, welches den Transport von Datenpaketen über mobile Kommunikationsnetzgrenzen hinweg ermöglicht. Hierbei wird zwischen Version MIPv4 und MIPv6 unterschieden, welche jeweils die unterschiedlichen Versionen 4 oder 6 des IP-Übertragungsprotokolls unterstützt. Gegenwärtig kommt das Mobile IP Übertragungsprotokoll in Kombination mit der Version 4 des Internet Protokolls (IPv4) zum Einsatz. Im Zusammenhang mit dem Mobile IP Übertragungsprotokoll (RFC 3344) wurden drei neue funktionale Entitäten definiert: mobile Netzknoten, Heimat-Agenten und Fremd-Agenten:

Unter einem mobilen Netzknoten ("Mobile Node, MN") wird eine Rechnereinheit verstanden, welche ihren Zugangspunkt im mobilen Kommunikationssystem verändern kann und hierbei eine bestehende Datenverbindung aufrechterhält und lediglich zur eindeutigen Identifizierung eine IP-Adresse benutzt.
Ein Heimat-Agent ("Home Agent, HA") ist eine Router-/Rechnereinheit mit einer Schnittstelle zum Heimat-Kommunikationsnetz des mobilen Netzknotens. Er wird vom mobilen Netzknoten über dessen derzeitigen Standort informiert, empfängt an den mobilen Netzknoten adressierte Datenpakete und leitet diese an ihn weiter.

Als Fremd-Agent ("Foreign Agent, FA") wird eine Router-/Rechnereinheit im fremden Kommunikationsnetz bezeichnet, welche Datenpakete an den mobilen Netzknoten weiterleitet und als Standard-Routereinheit für vom mobilen Netzknoten erzeugte Datenpakete dient.

Jeder mobile Knoten besitzt zwei Adressen: eine Heimatadresse und eine so genannte "Care-of-Adresse". Die Heimatadresse ("Home Address") ist die IP-Adresse, unter der der mobile Netzknoten seinen Kommunikationspartnern bekannt ist. Sie ist diesem "permanent" zugeordnet und bleibt auch dann fix, wenn der mobile Netzknoten beispielsweise im mobilen Kommunikationsnetz wandert. Der vordere Teil der Heimatadresse, der das Netzwerk spezifiziert, ist identisch mit dem Netzwerk-Präfix, das die Hosts- und Routereinheiten im Heimat-Kommunikationsnetz des mobilen Netzknotens besitzen.

Die Care-of-Adresse ("Care-of Address", COA) ist eine IP-Adresse, die temporär von einem mobilen Netzknoten benutzt wird, wenn er ein fremdes Kommunikationsnetz besucht. Sie ist spezifisch für das fremde Kommunikationsnetz und ändert sich sobald der mobile Netzknoten ein neues fremdes Kommunikationsnetz besucht. Die Care-of-Adresse definiert somit die Lokation des mobilen Netzknotens und stellt diejenige Adresse dar, zu der die an den mobilen Netzknoten gerichteten Datenpakete weitergeleitet werden.

Ferner ist aus den Standards RFC 1701 und 1702 das "Generic Route Encapsulation" (GRE) Übertragungsprotokoll bekannt, bei dem in Verbindung mit dem "Point-to-Point Tunneling Protocol" (PPTP) eine Tunnelverbindung zwischen beispielsweise einem virtuellen privaten Kommunikationsnetz (VPN) und einem Client oder zwischen mehreren Clients oder zwischen Clients und Servereinheit aufgebaut wird. Hierzu wird die verschlüsselte Nutzlast ("payload") in ein GRE-Datenpaket eingefügt und zwischen den End-Punkten über ein Transport-Protokoll des Tunnels übertragen. Im Anschluss daran erfolgt die weitere Vermittlung des über den Tunnel übertragenen Datenpaketes über ein "normales" Übertragungsprotokoll wie beispielsweise das IP Übertragungsprotokoll zum Empfänger. Hierzu ist gemäß dem GRE Übertragungsprotokoll ein Schlüsselfeld vorgesehen, in dem ein GRE-Schlüssel hinterlegt wird, über welchen das Datenpaket identifiziert wird.

Aus der Internet-Veröffentlichung "GRE Key Extensions for Mobile IPv4" von Parviz Yegani et al., IETF Mobile IP Working Group ist eine Erweiterung des Mobile IPv4 Übertragungsprotokolls zum Austausch von GRE-Schlüsseln bekannt. Hierin wird ein Verfahren zum Aufbau einer Tunnelverbindung zwischen einem Fremd-Agenten und einem Heimat-Agenten beschrieben, wobei die Konfiguration des das Mobile IPv4 Übertragungsprotokolls ausführenden Heimat-Agenten unverändert beibehalten werden kann und zugleich Überschneidungen im IPv4 Adressbereich vermieden werden.

Im mobilen Kommunikationsnetz ist ferner dem Fremd-Agenten eine Access-Service-Network-Gateway-Einheit (ASN-GW) und Heimat-Agenten eine Connectivity-Service-Networks-Einheit (CSN) zugeordnet. Hierbei sind der Fremd-Agent und der Heimat-Agent über eine mit dem Kürzel R3 versehene Schnittstelle miteinander verbunden. Gemäß derzeitigem Standardisierungsstand wird zwar durch die zumindest teilweise standardisierte Schnittstelle R3 das IPv4 und IPv6 Datenübertragungsprotokoll unterstützt, jedoch keinesfalls gleichzeitig das Ethernet Datenübertragungsprotokoll.

Ein Network Access Identifier NAI ist ein ursprünglich im RFC 2486 definierter User Identifier - Nutzeridentität - in "RADIUS" und "Diameter" Netzwerk Zugangs Protokollen [network access protocols] sowie EAP Authentifizierungsprotokollen. Network Access Identifier NAI werden standardmäßig zur Identifizierung von Usern/Nutzern verwendet, die Zugang zu einem Netzwerk wollen.

Die amerikanische Patentanmeldung US 2004/0221042 A1 offenbart ein Verfahren für mobiles Ethernet. Ein mobiles Ethernet Protokoll ist vorgesehen, um ein "Haus VLAN" durch eine Ethernet/IP "Campus Netz" zu mobilen Knoten in "fremden Subnetzen" logisch zu erweitern. Die verwendete Netzwerk Architektur ist hierarchisch und enthält ein Subnetz Context Manager pro Subnetz und einen zentralen Campus Context Manager.

Der Internet Draft "VPLS/LPE L2VPNs: Virutal Private LAN Services using Logical PE Architecture" von Dinesh Mohan et.al. betrifft Virtual Private LAN Service (VPLS), auch bekannt als Transparent LAN Service (TLS) - Schicht 2 VPN. VPLS simuliert eine virtuelle Ethernet 802.1d Bridge für eine Anzahl von Kunden in einem Metro oder Wide Area Network (WAN).

Aufgabe der vorliegenden Erfindung ist es, ein Verfahren zur Übertragung von Datenpaketen über das IPv4 und/oder das Ethernet Übertragungsprotokoll zwischen einem Heimat-Agenten-Einheit und einer Fremd-Agenten-Einheit anzugeben. Die Aufgabe wird ausgehend vom Oberbegriff des Patentanspruches 1 durch dessen kennzeichnende Merkmale gelöst.

Der wesentliche Aspekt des erfindungsgemäßen Verfahrens ist darin zu sehen, dass zumindest einer der zum Aufbau der "Generic Route Encapsulation" (GRE)-Tunnelverbindung vorgesehenen GRE-Schlüssel mit der Media-Access-Control-Adresse des mobilen Kommunikationsendgerätes verknüpft wird. Hierdurch hängt das Mobile IP Protokoll weder von der IP Adresse, die zwischen der FA-Einheit und der HA-Einheit ausgetauscht wird, noch von der jeweiligen Adressinformation im "Payload Header" der zwischen der FA-Einheit und der HA-Einheit aufgebauten GRE-Tunnelverbindung ab. Vorteilhaft wird beim erfindungsgemäßen Verfahren somit, dass die über die dritte Schnittstelle R3 zur Verfügung gestellte GRE-Tunnelverbindung unabhängig von dem jeweils verwendeten Übertragungsprotokoll. Dies ermöglicht die Übertragung von IP-basierten oder Ethernet-basierten Datenpaketen zwischen der Access-Service-Network-Einheit und der Connectivity-Service-Network-Einheit CSN. Somit ist die Unterstützung von mobilen Ethernet-Kommunikationsdiensten analog zu IP basierten Kommunikationsdiensten in einem Kommunikationssystem möglich. Auch können individuell adressierbare und über das mobile Kommunikationsendgerät mit dem Kommunikationssystem verbundene Hosteinheiten sowie eine Vielzahl von mobilen VLANs unterstützt werden. Das beschriebene Verfahren ist in allen Netzwerk-Konfigurationen vollständig transparent.

Weitere vorteilhafte Ausbildungen des erfindungsgemäßen Verfahrens sind den weiteren Ansprüchen zu entnehmen.

Das erfindungsgemäße Verfahren wird im Folgenden anhand eines Ausführungsbeispiels mittels Figuren näher erläutert.

Es zeigen:
- Fig. 1: beispielhaft in einem schematischen Blockschaltbild ein mobiles Kommunikationssystem zur Ausführung des erfindungsgemäßen Verfahrens und
- Fig. 2: beispielhaft in einem Signalisierungsdiagramm die zwischen den einzelnen Einheiten des in Figur1 dargestellten mobilen Kommunikationssystems durchgeführten Signalisierungsschritte.

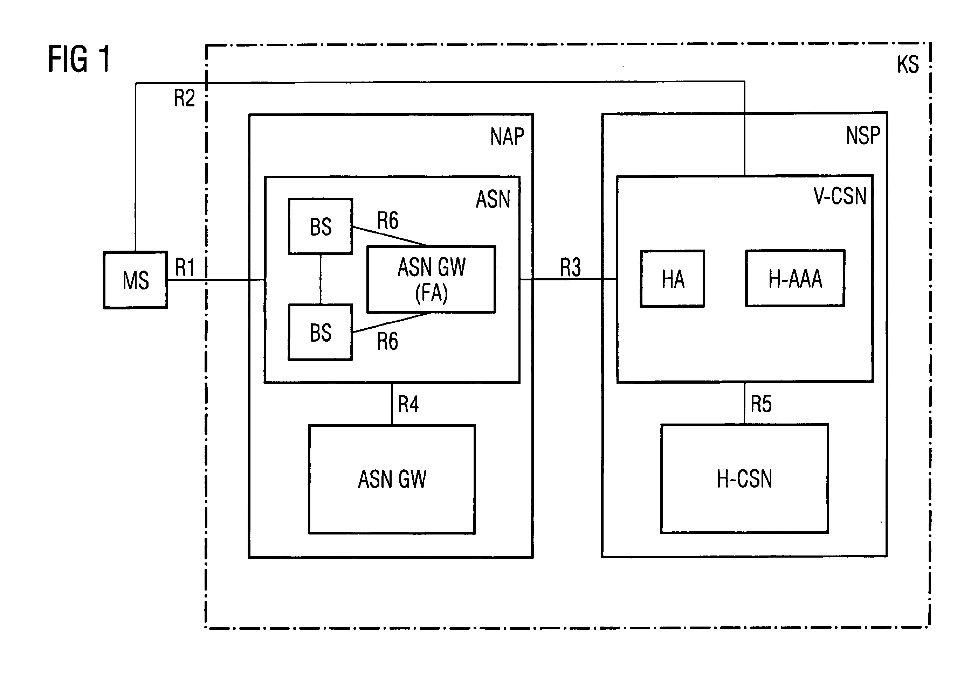

In Fig. 1 ist in einem schematischen Blockschaltbild beispielhaft ein Kommunikationssystem KS dargestellt, an welches eine mobile Kommunikationseinheit MS angeschlossen ist. Das Kommunikationssystem KS weist eine "Network-Access-Provider" (NAP)-Einheit NAP sowie eine "Network-Service-Provider" (NSP)-Einheit NSP auf, welche jeweils miteinander und mit dem mobilen Kommunikationsendgerät MS verbunden sind.

Die NAP-Einheit NAP weist ein mobiles Zugangsnetz ("Access-Service-Network") ASN auf, welchem eine "Access-Service-Network-Gateway" (ASN-GW)-Einheit ASN-GW zugeordnet ist. Die NSP-Einheit NSP verfügt über eine "Visited-Connectivity-Service-Network" (V-CSN)-Einheit V-CSN und über eine "Home-Connectivity-Service-Network" (H-CSN)-Einheit H-CSN. Die mobile Kommunikationseinheit MS ist ferner über eine erste Schnittstelle R1 mit der NAP-Einheit NAP und über eine zweite Schnittstelle R2 mit der V-CSN-Einheit V-CSN verbunden. Das mobile Zugangsnetz ASN weist über eine dritte Schnittstelle R3 eine Verbindung zur V-CSN-Einheit V-CSN sowie über eine vierte Schnittstelle R4 eine Verbindung zur ASN-GW-Einheit ASN-GW auf. Die V-CSN-Einheit ist über eine fünfte Schnittstelle R5 an die H-CSN-Einheit H-CSN angeschlossen.

Ferner ist in der NAP-Einheit NAP bzw. dessen mobilen Zugangsnetz ASN eine zur ASN-GW-Einheit ASN-GW zugeordnete "Foreign-Agent"(FA)-Einheit FA vorgesehen, die mit beispielsweise einer ersten und zweiten Basisstation BS verbunden ist. Zur Verbindung der Basisstation BS mit dem FA-Einheit FA ist eine sechste Schnittstelle R6 und zur Verbindung der Basisstationen BS untereinander weitere Schnittstelle vorgesehen. In der V-CSN-Einheit V-CSN sind ferner eine "Home-Agent" (HA)-Einheit HA sowie eine "Access-Authentification" (AAA)-Einheit H-AAA vorgesehen.

Das mobile Zugangsnetz ASN ist vorzugsweise als "Worldwide Interoperability for Microwave Access" (WiMAX)-Zugangsnetz ausgebildet und unterstützt eine Übertragung von Datenpaketen über das Mobile IP-Übertragungsprotokoll Version 4 (MIPv4).

Durch die mobile Kommunikationseinheit MS wird sowohl das IP-Übertragungsprotokoll als auch das Ethernet-Übertragungsprotokoll unterstützt.

Wie der nachfolgend dargestellte "Protokoll Stack" zeigt wird der von der mobilen Kommunikationseinheit MS erzeugte Ethernet-Übertragungsrahmen transparent mittels einer GRE-Tunnelverbindung zur CSN-Einheit CSN übertragen.

Aus Sicht der mobilen Kommunikationseinheit MS, des mobilen Zugangsnetz ASN sowie der HA-Einheit HA bildet die GRE-Tunnelverbindung somit eine Art "Ethernetbrücke" aus.

**Protokoll Stack**

| | **ASN** | | | | | **CSN** | |
|---|---|---|---|---|---|---|---|
| 802.3 | | | | | | 802.3 | 802.3 |
| CS | CS | DP | DP | MIPv4 | MIPv4 | | |
| | | Fn | Fn | | | | |
| 802.16 | 802.16 | L2 | L2 | L2 | L2 | | |
| MAC | MAC | | | | | | |
| 802.16 | 802.16 | L1 | L1 | L1 | L1 | L1 | L1 |
| PHY | PHY | | | | | | |
| **MS** | **BS** | | **FA** | | **HA** | | **Peer** |

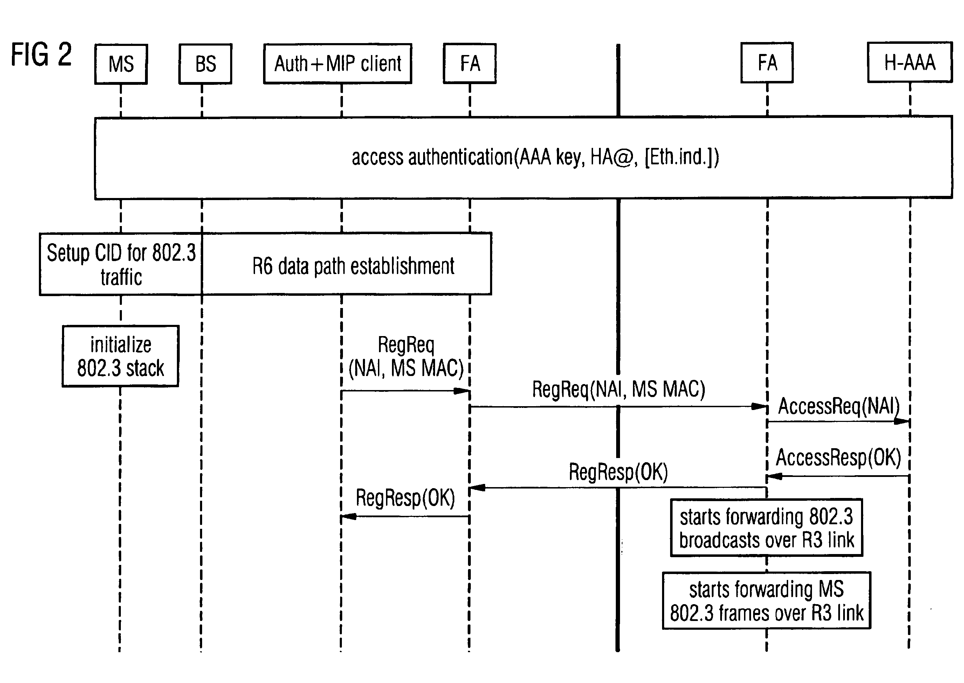

In Fig. 2 sind beispielhaft anhand eines schematischen Signalisierungsdiagrammes die einzelnen Signalisierungsschritte zwischen den in Figur 1 dargestellten Einheiten des Kommunikationssystems KS dargestellt. Insbesondere werden die zwischen der mobilen Kommunikationseinheit MS und den einzelnen Einheiten des Kommunikationssystems MKS zur Realisierung des erfindungsgemäßen Verfahrens übertragenen Signalisierungsnachrichten zum Aufbau einer GRE-Tunnelverbindung näher erläutert.

Hierzu wird zunächst eine "Access-Authentification" zwischen den in Figur 2 dargestellten Komponenten des Kommunikationssystems KS gemäß Figur 1 in Analogie zu den aus dem Stand der Technik bekannten PMIP/CMIP-Verfahren durchgeführt. Neben dem üblichen AAA-Schlüssel ("AAA key") und der HA-Adresse ("HA@") wird im Rahmen der "Access-Authentification" ein Indikationsparameter mit übertragen, welcher anzeigt, dass die mobile Kommunikationseinheit MS die Übertragung von Datenpaketen gemäß dem Ethernet-Übertragungsprotokoll unterstützt.

Dieser Indikationsparameter ist beispielsweise als optionaler "Radius Attribut" ausgebildet, welcher firmenspezifische Erweiterungen unterstützt. Ferner kann dieser Indikationsparameter beispielsweise durch eine im mobilen Zugangsnetz ASN ausgeführte MIP-Client-Anwendung ausgewertet werden.

In einer alternativen Variante wird durch die MIP-Client-Anwendung die Unterstützung des Ethernetprotokolls durch das mobile Kommunikationsendgerät MS dadurch ermittelt, dass die Indikationsparameter vom einem "Authenticator" übertragen wird, beispielsweise über einem in einer RNG-Request/RSPresponse-Nachricht vorgesehenen "CS Capabilities"-Parameter. Auch kann eine Übersendung des Indikationsparameters durch die AAA-Einheit H-AAA im Rahmen der "Access-Authentification" erfolgen.

Unabhängig hiervon wird zum Aufbau einer GRE-Tunnelverbindung über die dritte Schnittstelle R3 durch die MIP-Client-anwendung eine Registration-Request-Nachricht erzeugt und an die FA-Einheit FA übertragen. In der Registration-Request-Nachricht wird eine der mobilen Kommunikationseinheit MS zugeordnete MIPv4 Home-Adresse bzw. MIPv4 IP-Adresse eingefügt, welche lediglich Nullen aufweist.

Ferner wird in der Registration-Request-Nachricht ein Etherneterweitung ("Ethernet Extension") vorgesehen, der die "Media Access Control" (MAC)-Adresse MS MAC der mobilen Kommunikationseinheit MS zugeordnet wird. Hierbei weist die Etherneterweitung beispielsweise das im Standard RFC 3344 beschriebenen Format von derartigen "Extensions" im Rahmen des Mobile IPV4 Übertragungsprotokolls auf.

Die von der FA-Einheit FA empfangene Registration-Request-Nachricht wird an die HA-Einheit HA weitergeleitet und in dieser nach Empfang der Registration-Request-Nachricht eine "GRE Encapsulation" durch den Home-Agenten HA mittels einer Access-Request-Nachricht bei der AAA-Einheit H-AAA beantragt. Hierbei wird durch die FA-Einheit durch Setzen des G-Flags in der Registration-Request-Nachricht der HA-Einheit HA angezeigt, dass durch diese das "GRE Encapsulation"-Verfahren unterstützt wird (siehe hierzu Internet-Veröffentlichung "GRE Key Extensions for Mobile IPv4" von Parviz Yegani et al., IETF Mobile IP Working Group).

Ferner wird gemäß dem standardisierten GRE-Verfahren durch die FA-Einheit FA ein GRE-Schlüssel zugeteilt und in eine standardgemäß vorgesehene GRE-Erweiterung ("GRE Extension") eingefügt. Hierbei befindet sich die GRE-Erweiterung vorzugsweise zwischen dem MN-HA-Challenge und MN-FA-Challenge und MN-AAA-Erweiterungen (falls vorhanden), jedoch vor der FA-HA-Authoriziation-Erweiterung. Die FA-Einheit FA speichert den in der Registration-Request-Nachricht eingefügten GRE-Schlüssel als Teil seiner Kontextinformationen und verküpft den zugeordneten GRE-Schlüssel mit der mobilen Kommunikationseinheit MS.

Nach Empfang der Registration-Request-Nachricht durch die HA-Einheit HA liest diese die in der Etherneterweiterung enthaltenen MAC-Adresse aus und verknüpft die ausgelesene MAC-Adresse der mobilen Kommunikationseinheit MS mit dessen Care-of-Adresse (COA). Darüber hinaus wird durch die HA-Einheit der empfangenen GRE-Schlüssel zu den Mobility-Binding-Kontextinformationen hinzugefügt bzw. diesen zugeordnet. Die HA-Einheit HA erzeugt darüber hinaus einen weiteren GRE-Schlüssel und sendet diesen in einer Registration-Response-Nachricht zur FA-Einheit FA zurück.

Nach erfolgreicher Registrierung werden durch die HA-Einheit HA diejenigen auf dem Ethernet-Übertragungsprotokoll basierenden Datenpakete ermittelt, welchen die zuvor ausgelesene MAC-Adresse zugeordnet ist. Die ermittelten Datenpakete bzw. Ethernet-Übertragungsrahmen werden über die aufgebaute GRE Tunnelverbindung anschließend von der HA-Einheit HA an die FA-Einheit FA weitergeleitet. Hierbei wird durch die HA-Einheit HA der durch die FA-Einheit FA zugeordnete GRE-Schlüssel in den GRE-Datenpaket-Header eingefügt.

Basierend auf dem empfangenen GRE-Schlüssel wird durch die FA-Einheit FA diejenige mobile Kommunikationseinheit MS identifiziert, an welche der Ethernet-Übertragungsrahmen bzw. Datenpakete übertragen werden sollen. Somit wird durch die FA-Einheit FA nicht der innere Datenpaketheader, insbesondere die darin befindliche MAC Adresse zur Ermittlung des zugeordneten mobilen Kommunikationsendgerätes MS verwendet. Dies ist insbesondere dann vorteilhaft, wenn an die mobile Kommunikationseinheit MS mehrere Hosteinheiten angeschlossen sind. In einem solchen Fall wird durch die HA-Einheit HA die MAC Adresse der Hosteinheiten zwischen der mobilen Kommunikationseinheit MS dann ermittelt, sobald nach aufgebauter GRE-Tunnelverbindung durch die Hosteinheiten erzeugte Ethernet-Übertragungsrahmen bzw. Datenpakete gesendet werden.

Nach erfolgter Ermittlung der MAC Adressen der "hinter" der mobilen Kommunikationseinheit MS angeordneten Hosteinheiten werden durch die HA-Einheit HA über die GRE-Tunnelverbindung an die ermittelten MAC-Adressen der Hosteinheiten gerichtete Datenpakete direkt übertragen. Hierbei werden wiederum durch die HA-Einheit HA die an die Hosteinheiten adressierten Datenpakete mit dem GRE-Schlüssel der FA-Einheit FA versehen.

Die FA-Einheit FA überwacht wiederum lediglich die über die GRE-Tunnelverbindung in den empfangenen Datenpaketen enthaltenen GRE-Schlüssel, um ausgehend hiervon diejenige zugeordnete mobile Kommunikationseinheit MS zu identifizieren, an das die verschlüsselte "Payload" des empfangenen Datenpaketes weitergeleitet werden soll. In Uplink-Richtung, d.h. bei Senden von Datenpaketen durch die mobile Kommunikationseinheit MS oder dessen zugeordneten Hosteinheiten in das Kommunikationssystem KS wird durch die HA-Einheit HA der in den empfangenen Datenpaketen enthaltene GRE-Schlüssel anstelle der Zieladresse der "inneren Headerelemente" des Datenpaketes ausgewertet, um den zugeordneten "Mobility-Context-Inhalt" zu ermitteln.

Darüber hinaus kann auch ein "Ethernet-Broadcast" über die Home-Link-Verbindung durch die HA-Einheit HA über sämtliche über die dritte Schnittstelle R3 aufgebauten GRE-Tunnelverbindungen, welche die zuvor beschriebene Ethernet-Erweiterung aufweisen, gesendet werden.

Nach erfolgreicher Registrierung der Tunnelverbindung über die dritte Schnittstelle R3 besteht die Möglichkeit durch das mobile Kommunikationsendgerät MS weitere höheren Schichtebenen zugeordnete Datenübertragungsprotokolle wie beispielsweise IPv4 oder IPv6 ohne Anpassungen dieser zu verwenden. Die Übergabe und Verarbeitung von beispielsweise auf dem IPv4- oder IPv6-Übertragungsprotokoll basierenden Datenpaketen erfolgt im mobilen Zugangsnetz ASN komplett transparent im Hinblick auf das im mobilen Kommunikationsendgerät MS ausgeführte Ethernet-Übertragungsprotokoll.

Zur Realisierung des erfindungsgemäßen Verfahrens sind in der HA-Einheit HA somit abweichend von den bisher standardisierten Verfahren folgende Änderungen vorzunehmen:
- Auffangen und Einfügen von Ethernet-Übertragungsrahmen auf der Home-Link-Verbindung, wobei die HA-Einheit HA als Brücke mit über die dritte Schnittstelle R3 aufgebauten GRE-Tunnelverbindungen fungiert.
- Unterstützung von Ethernet-Erweiterungen im standardisierten Registration-Request/ Registration-Request-Reply-Verfahren. Der Empfang von Ethernet-Erweiterungen aufweisenden Registration-Request-Nachrichten steuern den HA-Agenten HA in einen Betriebszustand, welcher eine "Brücke" für die jeweils in den Ethernet-Erweiterungen zugeordnete MAC-Adresse ausbildet.
- Erzeugung einer bidirektionalen Tunnelverbindung zur Übertragung von Ethernet-basierten Datenpaketen über die dritte Schnittstelle R3.

In der FA-Einheit FA sind folgende Änderungen vorzunehmen:
- Erzeugung einer bidirektionalen Tunnelverbindung zur Übertragung von Ethernet-basierten Datenpaketen über die dritte Schnittstelle R3.
- Aufbau einer GRE-Tunnelverbindung gemäß dem standardisierten GRE-Verfahren mit zusätzlicher Unterstützung von GRE-Schlüsseln.
- Unterstützung von Etherneterweiterungen im standardisierten Registration-Request- / Registration-Request-Reply-Verfahren.
- Die empfangene Etherneterweiterungen in einer Registration-Request-Nachricht werden von der PMIP-Client-anwendung ausgewertet und ausgehend hiervon GRE-Erweiterungen über die Registration-Request-Nachricht an die HA-Einheit HA gesendet.

Durch die MIP-Clientanwendung wird im Rahmen des Registrierungsverfahrens zusätzlich die Unterstützung des Ethernet Übertragungsprotokolls durch die mobile Kommunikationseinheit MS ermittelt und abhängig hiervon über die Registration-Request-Nachricht die Etherneterweiterung gesendet.

### Bezugszeichenliste

- ASN: mobiles Zugangsnetz
- ASN-GW: Access-Service-Network-Gateway-Einheit
- BS: Basisstation
- FA: Foreign-Agent-Einheit
- HA: Home-Agent-Einheit
- H-AAA: Access-Authentification-Einheit
- H-CSN: Home-Connectivity-Service-Network
- KS: Kommunikationssystem
- MS: mobile Kommunikationseinheit
- NAP: Network-Access-Provider-Einheit
- NSP: Network-Service-Provider-Einheit
- R1: erste Schnittstelle
- R2: zweite Schnittstelle
- R3: dritte Schnittstelle
- R4: vierte Schnittstelle
- R5: fünfte Schnittstelle
- R6: sechste Schnittstelle
- V-CSN: Visited-Connectivity-Service-Network

## Patentansprüche

1. Verfahren zur Übertragung von auf dem Ethernet-Übertragungsprotokoll basierenden Datenpaketen zwischen zumindest einer mobilen Kommunikationseinheit (MS) und einem Kommunikationssystem (KS) über eine zwischen einer Heimat-Agenten-Einheit (HA) und einer Fremd-Agenten-Einheit (FA) aufgebaute "Generic Route Encapsulation", GRE, -Tunnelverbindung, wobei der mobilen Kommunikationseinheit (MS) eine "Media-Access-Control", MAC, -Adresse zugeordnet ist,
**dadurch gekennzeichnet,**
**dass** zumindest einer der zum Aufbau der "Generic Route Encapsulation", GRE, -Tunnelverbindung vorgesehenen GRE-Schlüssel mit der Media-Access-Control-Adresse der mobilen Kommunikationseinheit (MS) verknüpft wird.

2. Verfahren nach Anspruch 1,
**dadurch gekennzeichnet,**
**dass** der in der Fremd-Agenten-Einheit (FA) vorgesehene GRE-Schlüssel und der weitere in der Heimat-Agenten-Einheit (HA) vorgesehene GRE-Schlüssel jeweils mit der MAC-Adresse der mobilen Kommunikationseinheit (MS) verknüpft werden.

3. Verfahren nach Anspruch 1 oder 2,
**dadurch gekennzeichnet,**
**dass** in der zum Aufbau der GRE-Tunnelverbindung von der Fremd-Agenten-Einheit (FA) an die Heimat-Agenten-Einheit (HA) übertragenen Registration-Request-Nachricht eine Etherneterweiterung vorgesehen wird, in der die MAC-Adresse der mobilen Kommunikationseinheit MS eingefügt wird.

4. Verfahren nach einem der Ansprüche 1 bis 3,
**dadurch gekennzeichnet,**
**dass** in der zum Aufbau der GRE-Tunnelverbindung von der Heimat-Agenten-Einheit (HA) an die Fremd-Agenten-Einheit (FA) übertragenen Registration-Reply-Nachricht eine Etherneterweiterung vorgesehen wird.

5. Verfahren nach Anspruch 3,
**dadurch gekennzeichnet,**
**dass** nach Empfang der Registration-Request-Nachricht durch die HA-Einheit HA die in der Etherneterweiterung enthaltenen MAC-Adresse ausgelesen und mit einer der mobilen Kommunikationseinheit (MS) zugeordneten Care-of-Adresse verknüpft wird.

6. Verfahren nach einem der Ansprüche 2 bis 5,
**dadurch gekennzeichnet,**
**dass** der in der Fremd-Agenten-Einheit (FA) vorgesehene GRE-Schlüssel und der weitere in der Heimat-Agenten-Einheit (HA) vorgesehene GRE-Schlüssel über die Registration-Request-Nachricht bzw. Registration-Reply-Nachricht zwischen der Fremd-Agenten-Einheit (FA) und der Heimat-Agenten-Einheit (HA) ausgetauscht werden.

7. Verfahren nach einem der Ansprüche 1 bis 6,
**dadurch gekennzeichnet,**
**dass** die GRE-Tunnelverbindung über die R3-Schnittstelle aufgebaut wird.

8. Verfahren nach einem der Ansprüche 1 bis 7,
**dadurch gekennzeichnet,**
**dass** im Rahmen einer "Access-Authentification" ein Indikationsparameter zumindest an die Fremd-Agenten-Einheit (FA) bzw. eine darin ausgeführte MIP-Clientanwendung übertragen wird, welcher anzeigt, dass die mobile Kommunikationseinheit (MS) die Übertragung von auf dem Ethernet-Übertragungsprotokoll basierenden Datenpaketen unterstützt.

9. Verfahren nach einem der Ansprüche 3 bis 8,
**dadurch gekennzeichnet,**
**dass** durch eine MIP-Clientanwendung die Registration-Request-Nachricht erzeugt und an die FA-Einheit FA übertragen wird.

10. Verfahren nach Anspruch 9,
**dadurch gekennzeichnet,**
**dass** durch die MIP-Clientanwendung eine der mobilen Kommunikationseinheit (MS) zugeordnete MIP-Home-Adresse in die Registration-Request-Nachricht eingefügt wird, welche lediglich Nullen aufweist.

11. Verfahren nach einem der Ansprüche 4 bis 10,
**dadurch gekennzeichnet,**
**dass** die in der Registration-Request-Nachricht und in der Registration-Request-Nachricht vorgesehene Etherneterweitung gemäß dem im Standard RFC 3344 beschriebenen Format ausgebildet wird.

## Claims

1. Method for transmitting Ethernet-transmission-protocol-based data packets between at least one mobile communication unit (MS) and a communication system (KS) via a "Generic Route Encapsulation", GRE, tunnel connection set up between a home agent unit (HA) and a foreign agent unit (FA), wherein a "media access control", MAC, address is assigned to the mobile communication unit (MS),
**characterised in that**
at least one of the GRE keys provided for setting up the "Generic Route Encapsulation", GRE, tunnel connection is linked with the media access control address of the mobile communication unit (MS).

2. Method according to claim 1,
**characterised in that**
the GRE key provided in the foreign agent unit (FA) and the further GRE key provided in the home agent unit (HA) are in each case linked with the MAC address of the mobile communication unit (MS).

3. Method according to claim 1 or 2,
**characterised in that**
an Ethernet extension in which the MAC address of the mobile communication unit MS is inserted is provided in the Registration Request message transmitted by the foreign agent unit (FA) to the home agent unit (HA) for the purpose of setting up the GRE tunnel connection.

4. Method according to one of claims 1 to 3,
**characterised in that**
an Ethernet extension is provided in the Registration Reply message transmitted by the home agent unit (HA) to the foreign agent unit (FA) for the purpose of setting up the GRE tunnel connection.

5. Method according to claim 1,
**characterised in that**
following reception of the Registration Request message by the HA unit HA the MAC address contained in the Ethernet extension is read out and linked with the care-of address assigned to one of the mobile communication unit (MS).

6. Method according to one of claims 2 to 5,
**characterised in that**
the GRE key provided in the foreign agent unit (FA) and the further GRE key provided in the home agent unit (HA) are exchanged between the foreign agent unit (FA) and the home agent unit (HA) via the Registration Request message and Registration Reply message respectively.

7. Method according to one of claims 1 to 6,
**characterised in that**
the GRE tunnel connection is set up via the R3 interface.

8. Method according to one of claims 1 to 7,
**characterised in that**
as part of an "Access Authentication" an indication parameter is transmitted at least to the foreign agent unit (FA) or a MIP client application executed therein, which indication parameter indicates that the mobile communication unit (MS) supports the transmission of data packets based on the Ethernet transmission protocol.

9. Method according to one of claims 3 to 8,
**characterised in that**
the Registration Request message is generated by a MIP client application and transmitted to the FA unit FA.

10. Method according to claim 9,
**characterised in that**
a MIP home address assigned to the mobile communication unit (MS) and containing only zeroes is inserted into the Registration Request message by the MIP client application.

11. Method according to one of claims 4 to 10,
**characterised in that**
the Ethernet extension provided in the Registration Request message and in the Registration Request message is embodied in accordance with the format described in the RFC 3344 standard.

## Revendications

1. Procédé de transmission de paquets de données basés sur le protocole de transmission Ethernet entre au moins une unité de communication mobile (MS) et un système de communication (KS) via une liaison par tunnel « Generic Route Encapsulation » GRE établie entre une unité d'agent d'origine (HA) et une unité d'agent étranger (FA), une adresse « Media Access Control » MAC étant affectée à l'unité de communication mobile (MS), **caractérisé en ce qu'**au moins l'une des clés GRE prévues pour établir la liaison par tunnel « Generic Route Encapsulation » GRE est combinée à l'adresse « Media Access Control » de l'unité de communication mobile (MS).

2. Procédé selon la revendication 1, **caractérisé en ce que** la clé GRE prévue dans l'unité d'agent étranger (FA) et l'autre clé GRE prévue dans l'unité d'agent d'origine (HA) sont chacune combinées à l'adresse MAC de l'unité de communication mobile (MS).

3. Procédé selon la revendication 1 ou 2, **caractérisé en ce qu'**est prévu, dans le message de demande d'enregistrement transmis de l'unité d'agent étranger (FA) à l'unité d'agent d'origine (HA) pour établir la liaison par tunnel GRE, un élargissement Ethernet dans lequel est insérée l'adresse MAC de l'unité de communication mobile MS.

4. Procédé selon l'une des revendications 1 à 3, **caractérisé en ce qu'**un élargissement Ethernet est prévu dans le message de réponse d'enregistrement transmis de l'unité d'agent d'origine (HA) à l'unité d'agent étranger (FA) pour établir la liaison par tunnel GRE.

5. Procédé selon la revendication 3, **caractérisé en ce que**, après la réception du message de demande d'enregistrement par l'unité d'agent d'origine HA, l'adresse MAC contenue dans l'élargissement Ethernet est lue et est combinée à une adresse « care of » affectée à l'unité de communication mobile (MS).

6. Procédé selon l'une des revendications 2 à 5, **caractérisé en ce que** la clé GRE prévue dans l'unité d'agent étranger (FA) et l'autre clé GRE prévue dans l'unité d'agent d'origine (HA) sont échangées par l'intermédiaire du message de demande d'enregistrement resp. du message de réponse d'enregistrement entre l'unité d'agent étranger (FA) et l'unité d'agent d'origine (HA).

7. Procédé selon l'une des revendications 1 à 6, **caractérisé en ce que** la liaison par tunnel GRE est établie via l'interface R3.

8. Procédé selon l'une des revendications 1 à 7, **caractérisé en ce qu'**est transmis, dans le cadre d'une « Access Authentification », un paramètre d'indication au moins à l'unité d'agent étranger (FA) resp. à une application client MIP qui y est exécutée, lequel indique que l'unité de communication mobile (MS) supporte la transmission de paquets de données basés sur le protocole de transmission Ethernet.

9. Procédé selon l'une des revendications 3 à 8, **caractérisé en ce que**, par une application client MIP, le message de demande d'enregistrement est généré et transmis à l'unité d'agent étranger FA.

10. Procédé selon la revendication 9, **caractérisé en ce que**, par l'application client MIP, une adresse d'origine MIP affectée à l'unité de communication mobile (MS), qui comporte uniquement des zéros, est insérée dans le message de demande d'enregistrement.

11. Procédé selon l'une des revendications 4 à 10, **caractérisé en ce que** l'élargissement Ethernet prévu dans le message de demande d'enregistrement et dans le message de demande d'enregistrement est réalisé selon le format décrit dans la norme RFC 3344.
